# FASCICULE DE BREVET EUROPEEN

(11) **EP 2 978 123 B1**
(45) Date de publication et mention de la délivrance du brevet: **08.05.2019**
(21) Numéro de dépôt: 15177468.4
(22) Date de dépôt: 20.07.2015
(51) Int. Cl.: H02N 1/04

(54) **PROCEDE DE REALISATION D'UN GENERATEUR TRIBO -ELECTRIQUE A POLYMERE DIELECTRIQUE RUGUEUX**
VERFAHREN ZUR HERSTELLUNG EINES TRIBOELEKTRISCHEN GENERATORS MIT EINEM RAUEN DIELEKTRISCHEN POLYMER
METHOD FOR MANUFACTURING A TRIBOELECTRIC GENERATOR WITH ROUGH DIELECTRIC POLYMER

(30) Priorité: 24.07.2014 FR 1457138
(43) Date de publication de la demande: 27.01.2016
(73) Titulaire: Commissariat à l'Énergie Atomique et aux Énergies Alternatives, 75015 Paris (FR)
(72) Inventeur: Aliane, Abdelkader, 38100 Grenoble (FR)
(74) Mandataire: Brevalex

(56) Documents cités:
- US-A1- 2013 049 531

## Description

### DOMAINE TECHNIQUE ET ART ANTÉRIEUR

La présente invention concerne le domaine des générateurs à effet tribo-électrique et leur fabrication.

Elle prévoit notamment de réaliser un générateur triboélectrique doté d'au moins un élément comportant une couche de matériau polymère diélectrique à surface rugueuse, sans nécessairement devoir utiliser un moule pour créer ou modifier la rugosité de la surface de cette couche de matériau diélectrique.

Le fonctionnement d'un générateur tribo-électrique repose sur une mise en contact d'un premier matériau et d'un deuxième matériau de natures différentes, un premier matériau ayant tendance à céder des électrons, le deuxième matériau ayant de préférence tendance à capter des électrons. En mettant en contact des matériaux de propriétés triboélectriques différentes on créé un transfert de charges entre ces deux matériaux qui peut être traduit sous forme d'une différence de potentiels ou d'un courant. L'effet triboélectrique peut être augmenté en frottant les matériaux l'un contre l'autre.

Pour fabriquer un générateur tribo-électrique, il est connu d'utiliser une couche de matériau polymère que l'on structure pour créer en surface une rugosité importante et pouvoir ainsi augmenter le phénomène de friction.

Les documents US 2013/0049531 A1 et « Transparent Triboelectric Nano-generators and Self-Powered Pressure Sensors Based on Micropatterned Plastic Films », Feng-Ru Fan et al., Nano Letters 2012, 12, 3109-3114 présentent un procédé de réalisation d'un générateur à effet triboélectrique comprenant une couche de polydimethylsiloxane (PDMS) à surface rugueuse, dont la rugosité est formée par création de motifs sous forme de rainures, ou bien de cubes, ou encore de pyramides, à l'aide d'un moule.

Un tel procédé nécessite un remplissage du moule par du PDMS, et surtout une étape délicate de retrait du PDMS structuré du moule sans le détériorer. Le retrait du PDMS peut par ailleurs avoir pour inconvénient de nécessiter l'utilisation d'un surfactant.

Il se pose le problème de trouver un nouveau procédé de réalisation d'un générateur à effet tribo-électrique doté d'au moins une couche de matériau polymère rugueuse et qui ne nécessite pas l'utilisation d'un moule.

### EXPOSÉ DE L'INVENTION

Selon un mode de réalisation, la présente invention concerne tout d'abord un procédé de réalisation d'un élément d'un générateur à effet triboélectrique comprenant des étapes consistant à :
a) former sur un support une couche à base d'un matériau à base d'un polymère diélectrique donné,
b) effectuer au moins un traitement thermique sur le matériau polymère diélectrique donné de manière à cristalliser le matériau polymère diélectrique donné et générer des structures en forme de micro-pointes, en particulier coniques, en surface du matériau polymère diélectrique donné.

Le matériau polymère diélectrique donné peut être choisi de manière à avoir une constante diélectrique élevée, de préférence telle que εᵣ > 30 (εᵣ étant la permittivité relative du matériau diélectrique).

Le matériau polymère diélectrique donné est avantageusement un matériau hydrophobe.

Le matériau polymère diélectrique donné peut être ainsi doté d'un groupement fluoré, par exemple un groupement de polyfluorure de vinylidène (PVDF).

Avantageusement, le matériau polymère diélectrique donné peut être un terpolymère tel que le P(VDF-TrFe-CFE) ou le P(VDF-TrFe-CTFE) ou un mélange de P(VDF-TrFe-CFE) et de P(VDF-TrFe-CTFE). D'autres polymères à base de PVDF comme les copolymères P(VDF-TrFe) peuvent être utilisés.

Le matériau polymère formé à l'étape a) peut être sous forme d'une matrice polymère comportant un additif, choisi de manière à avoir une vitesse de transition supérieure à celle du polymère diélectrique donné.

On entend par « transition » une modification structurale sous l'effet de la variation d'un paramètre extérieur, ici la température.

L'additif peut être choisi de sorte à avoir une température de changement de sa structuration inférieure à celle du polymère donné et de sorte que lorsqu'on effectue le traitement thermique de cristallisation, une modification structurale (cristallisation) de la matrice de polymère entraine une mise en contrainte de cet additif.

Cette contrainte mécanique fait ressortir des structures sous forme de micro-pointes en particulier de forme coniques.

L'étape b) de traitement thermique peut être un recuit photonique comprenant une exposition de la couche de matériau polymère à au moins une impulsion lumineuse de rayonnement UV encore appelé flash UV. Un tel traitement a notamment pour avantage d'être rapide à réaliser et de permettre de modifier le matériau polymère diélectrique principalement en surface.

L'additif utilisé à l'étape a) peut être alors avantageusement un composé absorbant le rayonnement UV tel que du Pyrène.

Un tel additif peut permettre de favoriser le développement d'une surface rugueuse sur le matériau polymère diélectrique lors de l'étape b).

Selon une possibilité de mise en oeuvre, le support peut être un support flexible à base de matériau polymère.

Un mode de réalisation de la présente invention prévoit un procédé de fabrication d'un générateur à effet triboélectrique comprenant un premier élément destiné à être mis en contact avec un deuxième élément afin de créer des charges électriques, le procédé comprenant des étapes consistant à :
- effectuer un procédé tel que défini précédemment pour former le premier élément,
- former une couche à base de Graphène sur un deuxième support pour réaliser le deuxième élément.

Le Graphène a pour avantage d'être un matériau conducteur rugueux propice à générer des frottements et dont la conductivité électrique augmente avec la température, celle-ci étant susceptible d'augmenter lorsque les frottements augmentent.

L'invention concerne, selon un autre aspect, un générateur triboélectrique mis en oeuvre à l'aide d'un procédé tel que défini précédemment.

L'invention concerne ainsi également un générateur triboélectrique pour créer des charges électriques par mise en contact entre un premier élément et un deuxième élément, le premier élément comprenant une couche conductrice revêtue d'un matériau diélectrique polymère rugueux comportant des micro-pointes de forme de cône de révolution.

Le matériau polymère diélectrique donné peut être un matériau diélectrique à constante diélectrique élevée, en particulier telle que εᵣ > 30 (εᵣ étant la permittivité relative du matériau diélectrique).

Un matériau diélectrique à constante diélectrique élevée permet de générer un courant triboélectrique plus important, en particulier dans le cas où la friction (génération de température aux interfaces) fait augmenter sa constante diélectrique.

Le matériau polymère diélectrique donné peut être avantageusement un matériau hydrophobe.

En prévoyant un matériau polymère hydrophobe, on réduit l'humidité au niveau de la surface rugueuse de ce matériau entrant en contact avec un autre élément pour générer des charges électriques. On évite ainsi de réduire la friction au niveau de la surface de contact rugueuse ce qui permet d'avoir une meilleure production d'énergie électrique.

Le matériau polymère diélectrique donné peut comprendre un terpolymère, en particulier à base de PVDF tel que le P(VDF-TrFe-CFE) ou le P(VDF-TrFe-CTFE) ou un mélange de P(VDF-TrFe-CFE) et de P(VDF-TrFe-CTFE). On peut également utiliser un copolymère à base de PVDF tel que le P(VDF-TrFe).

Le deuxième élément peut être avantageusement revêtu de Graphène.

Un mode de réalisation de l'invention prévoit également un capteur d'humidité comprenant un générateur triboélectrique tel que défini plus haut.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- les figures 1A-1C illustrent un exemple de procédé selon un mode de réalisation de l'invention pour mettre en oeuvre un élément d'un générateur tribo-électrique, cet élément comprenant un matériau polymère diélectrique sur lequel on crée une surface rugueuse sous forme de micro-pointes coniques en modifiant par traitement thermique la structure du matériau diélectrique du polymère ;
- la figure 2 illustre une réalisation d'un autre élément de générateur tribo-électrique destiné à être mis en contact avec un élément tel qu'illustré par exemple sur les figures 1A-1C ;
- la figure 3 illustre une surface rugueuse dotée de micro-pointes coniques sur un matériau polymère diélectrique tel que mis en oeuvre dans un générateur tribo-électrique suivant l'invention ;
- la figure 4 illustre un exemple de dispositif suivant l'invention comprenant générateur tribo-électrique associé à un circuit de récupération et de stockage d'énergie électrique produite par le générateur;
- les figures 5A-5C illustrent un test électrique d'un générateur tribo-électrique ;
- la figure 6 illustre une variante de générateur tribo-électrique doté d'une couche de graphène destinée à être mise en contact avec un matériau polymère diélectrique rugueux afin d'améliorer la génération des charges électriques ;

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

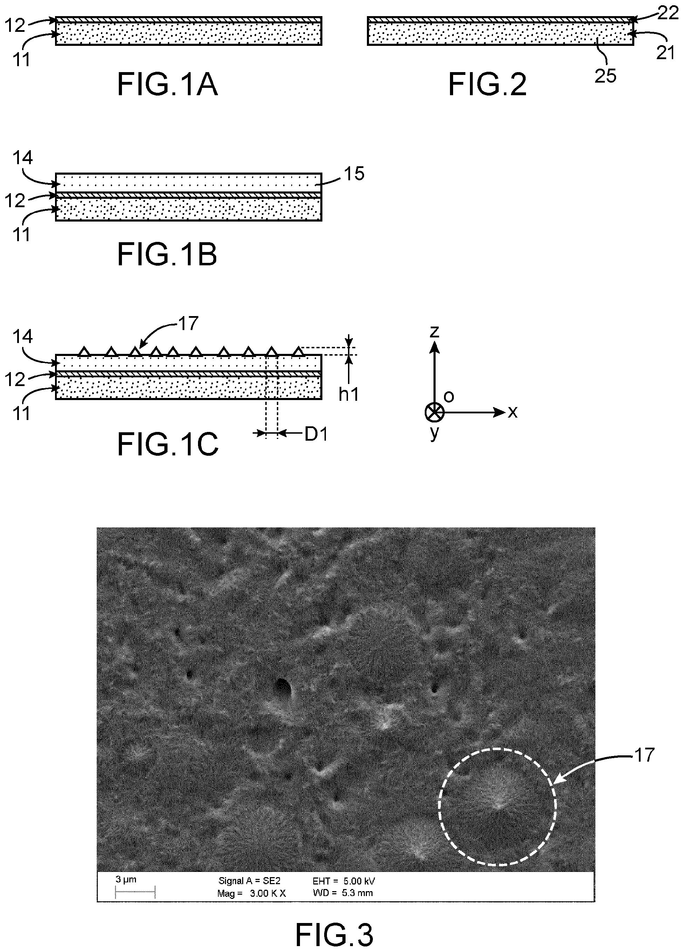

Un exemple de procédé de réalisation d'un élément de générateur triboélectrique va à présent être donné en liaison avec les figures 1A-1C.

Le matériau de départ de ce procédé peut être un support 11 dont la composition et l'épaisseur sont prévus de manière à le rendre flexible.

Le support 11 peut être formé d'une couche de matériau polymère, par exemple tel que du polynaphtalate d'éthylène (PEN) ou du Polytéréphtalate d'éthylène (PET), ou de polyimide (PI), ou de poly-éther-éther-cétone (PEEK), ou un substrat en papier cellulose et avoir une épaisseur qui peut être par exemple comprise entre 5 µm et 200 µm, par exemple de l'ordre de 25 µm.

Sur le support 11, on dépose tout d'abord une couche conductrice 12 (figure 1A), destinée à former une première électrode. La couche conductrice peut être formée par exemple par dépôt physique en phase vapeur (PVD) ou par jet d'encre, ou par sérigraphie, ou par pulvérisation assistée par ultrason (« ultrasonic spray coating » selon la terminologie anglo-saxonne).

La couche conductrice 12 peut être par exemple à base d'un matériau métallique tel que l'argent (Ag), le platine (Pt), l'aluminium (Al), le cuivre (Cu), l'or (Au), le titane (Ti),l'Indium Tin Oxide (ITO), ou de nano-fils, par exemple à base d'argent, et peut avoir une épaisseur comprise par exemple entre 10 nm et 1 µm. Selon un exemple de réalisation particulier, la couche métallique 12 est une couche à base d'or de 30 nm d'épaisseur.

Ensuite, on forme une couche 14 à base d'un matériau polymère diélectrique 15 (figure 1B) sur la couche métallique 12. La couche de matériau polymère diélectrique 15 a une épaisseur qui peut être comprise par exemple entre 100 nm et 20 µm. Le matériau polymère diélectrique 15 est choisi de préférence de manière à avoir une constante diélectrique élevée, en particulier telle que εᵣ > 30, et de préférence susceptible de varier en fonction de la température à laquelle est placée ce matériau. Le matériau polymère diélectrique 15 peut être également choisi de manière à avoir des propriétés hydrophobes. Pour répondre à ces critères, le matériau polymère diélectrique 15 choisi peut être par exemple à base d'un terpolymère comprenant un groupement fluoré, en particulier à base de polyfluorure de vinylidène (PVDF).

Selon des exemples de réalisations particuliers, le matériau polymère diélectrique 15 peut être du P(VDF-TrFe-CFE), ou du P(VDF-TrFe-CTFE), ou un composé à base de P(VDF-TrFe-CFE) et de P(VDF-TrFe-CTFE). Selon un autre exemple, le matériau polymère diélectrique 15 peut être un copolymère à base de PVDF comme par exemple du P(VDF-TrFe).

Préalablement à son dépôt, le matériau polymère diélectrique 15 peut être préparé sous forme d'un mélange d'une première solution à base d'un terpolymère tel que du P(VDF-TrFe), ou du P(VDF-TrFe-CTFE), ou du P(VDF-TrFe-CFE), ou du P(VDF-TrFe) et du P(VDF-TrFe-CTFE) mélangés, et d'une deuxième solution comprenant un additif ayant une température de transition, en particulier de cristallisation inférieure à celle du polymère donné. L'additif choisi peut être par exemple du Pyrène (C₁₆H₁₀).

La première solution peut être réalisée par introduction d'une poudre à base de P(VDF-TrFe-CFE) et/ou de P(VDF-TrFe-CTFE) que l'on dissout dans un solvant tel que par exemple du cyclopentanone, du diméthylformamide ou du diméthylacétamide.

La proportion de terpolymère dans son solvant peut varier en poids par exemple de 1% à 20%.

La deuxième solution peut être réalisée par introduction de grains solides de Pyrène que l'on dissout dans un solvant tel que par exemple de l'acétone de sorte à avoir une proportion en poids de Pyrène qui peut être par exemple comprise entre 5% et 40%.

La proportion de terpolymère dans le mélange conditionne notamment la viscosité de la solution de dépôt, celle-ci pouvant être adaptée en fonction du type de technique de dépôt que l'on souhaite utiliser. Par exemple, lorsqu'on souhaite réaliser un dépôt par sérigraphie on peut mettre en oeuvre une solution ayant une viscosité importante, ce en prévoyant une concentration importante en terpolymère dans son solvant. Selon un autre exemple, lorsqu'on souhaite réaliser un dépôt à la tournette (« spin coating » selon la terminologie anglo-saxonne) une solution de viscosité plus faible et donc ayant une concentration en terpolymère plus faible est mise en oeuvre.

La solution de dépôt peut être composée, au final, de 3% à 40% en poids de la deuxième solution dans la première solution. Le mélange final est remué à une température qui peut être comprise par exemple entre 30 °C et 45 °C.

Le dépôt de la solution de terpolymère est ensuite suivi d'au moins une étape de recuit thermique dit « de cristallisation », afin de modifier la structure du matériau polymère et augmenter la rugosité de sa surface. Un recuit thermique ou une successions de recuits à une température supérieure à la température de cristallisation du matériau polymère peut être réalisée.

On peut effectuer par exemple un premier recuit à une température qui peut être comprise par exemple entre 90 et 100°C et selon une durée qui peut être comprise par exemple entre 5 et 30 min. Un exemple particulier de mise en oeuvre prévoit de réaliser le premier recuit thermique à une température de l'ordre de 100°C pendant une durée de 5 minutes.

Ensuite, un deuxième recuit est effectué à une température qui peut être comprise par exemple entre 110 et 130 °C et selon une durée par exemple comprise entre 5 et 30 min. Ce deuxième recuit peut permettre d'améliorer la cristallisation du Polymère. Un exemple particulier de mise en oeuvre prévoit de réaliser le deuxième recuit thermique à une température de l'ordre de 115°C pendant une durée de 30 minutes.

Lors du ou des recuits, du fait de la vitesse de cristallisation plus élevée de la matrice de polymères, la structure de l'additif choisi, par exemple choisi parmi le Pyrène, le Polystyrène et un mélange de Polystyrène et de Pyrène, se modifie structurellement sur la surface à cause des contraintes mécaniques exercées par la cristallisation du matériau polymère diélectrique.

Les inventeurs ont constatés que, de manière surprenante, cette mise en contrainte se traduisait par l'apparition de microstructures ou micro-pointes 17 coniques, c'est à dire en forme de cône de révolution. Le traitement thermique du matériau polymère permet ainsi de favoriser la formation d'une rugosité importante sur la couche 12 (figure 1C).

L'apparition des micro-pointes coniques est conditionnée notamment par le choix en termes de vitesses respectives de cristallisation et de l'apparition de contraintes mécaniques sur la surface du terpolymère et de l'additif, et des conditions (temps, température) de recuit thermique. Une vitesse cristallisation du terpolymere ou du copolymère adéquate permet de contraindre mécaniquement l'additif au niveau de la surface et crée des microstructure sous forme de pointes.

La taille des micro-pointes 17 est quant à elle conditionnée notamment par la proportion en matériau terpolymère dans la solution de dépôt.

Les micro-pointes 17 obtenues peuvent avoir une base de diamètre D₁ (mesuré dans une direction parallèle au plan [0 ;x ;y] du repère orthogonal [0 ;x ;y ;z] sur la figure 1C) compris par exemple entre 2 µm et 10 µm, de l'ordre de plusieurs micromètres et une hauteur H₁ (mesurée dans une direction orthogonale au plan [0 ;x ;y] sur la figure 1C) compris par exemple entre 200 nm et 5 µm.

En remplacement du recuit thermique, on peut effectuer un recuit photonique pour cristalliser le matériau polymère 15 et faire apparaitre des micro-pointes 17 sur sa surface.

Le recuit photonique peut comprendre une exposition très brève, i.e. comprise entre plusieurs µs et plusieurs ms, à un rayonnement UV. Une impulsion UV encore appelé flash UV d'une durée par exemple comprise entre 1 ms et 2 ms, et selon une fluence comprise par exemple entre 15 J/cm² et 50 J/cm² peut être mise en oeuvre pour réaliser ce recuit photonique.

Un exemple particulier prévoit l'exposition au rayonnement pulsé UV avec une durée d'impulsion (également appelée « pulse ») de 2ms et une fluence de 17 J/cm² lorsque la couche de matériau polymère a une épaisseur de l'ordre de 2 µm.

La figure 3 donne une image obtenue par microscope électronique à balayage de la face supérieure d'une couche polymère formée à partir d'un mélange de PVDF et de Pyrène après un traitement thermique tel que décrit précédemment et conduisant à la formation de micro-pointes 17 coniques.

Pour pouvoir générer des charges électrostatiques, la couche 14 de matériau polymère diélectrique 15 à surface rugueuse et revêtue de micro-pointes 17 est destinée à être mise en contact avec un autre élément doté d'une électrode.

Un exemple de réalisation de cet autre élément est donné sur la figure 2 et comprend un deuxième support 21 destiné à être mis en contact avec la couche de matériau polymère diélectrique 15 à surface rugueuse. Le deuxième support 21 est formé à base d'un matériau donné présentant des caractéristiques triboélectriques différentes de celles du matériau polymère diélectrique 15 reposant sur le premier support 11.

Le deuxième support 21 peut être par exemple à base d'un matériau diélectrique 25, qui peut être polymère et semblable au matériau du premier support 11.

Le matériau diélectrique 25 du deuxième support 21 peut être ainsi par exemple du polynaphtalate d'éthylène (PEN) ou du Polytéréphtalate d'éthylène (PET), ou un polyimide (PI), ou du poly-éther-éther-cétone (PEEK), ou du papier cellulose et avoir une épaisseur qui peut être par exemple comprise entre 5 µm et 200 µm, par exemple de l'ordre de 25 µm. Ainsi, le deuxième support 21 peut également avoir une composition et une épaisseur prévues de manière à le rendre flexible.

Sur le deuxième support 21, une couche conductrice 22, qui peut être métallique, forme une deuxième électrode. La couche conductrice 22 peut être avantageusement réalisée en même temps que celle formée sur le premier support 11.

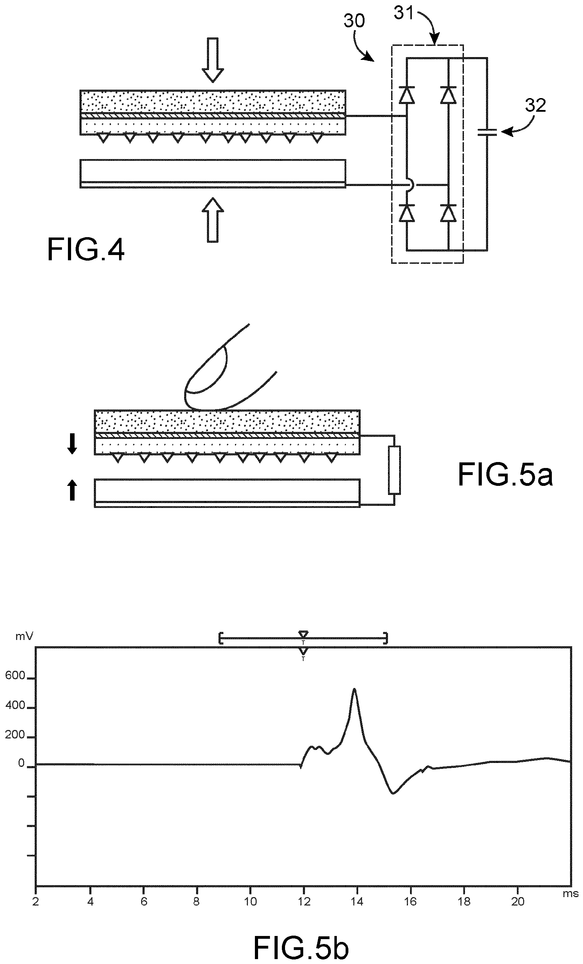

La figure 4 illustre le générateur tribo-électrique réalisé précédemment associé à un circuit de récupération d'énergie électrique.

Un actionnement du générateur triboélectrique peut être effectué en exerçant une pression sur le premier support 11 et/ou sur le deuxième support 21, de manière à mettre en contact la surface rugueuse de la couche 14 de matériau polymère diélectrique 15 dotée de micro-pointes 17 coniques avec le matériau diélectrique 25 du support 21.

La rugosité du matériau polymère diélectrique 15 à l'aide des micro-pointes de forme conique permet d'obtenir un bon coefficient de friction avec le matériau diélectrique 25. Au moment de la friction entre les matériaux 15 et 25 ayant des propriétés triboélectriques différentes, et en particulier des aptitudes différentes à céder ou accepter des électrons, un échauffement local dû aux frottements fait varier la constante diélectrique et donc la capacitance électrique du système et par conséquent le signal électrique généré par effet triboélectrique par le générateur.

Le circuit de récupération d'énergie électrique est connecté aux couches conductrices 12, 22 collectrices de charges et peut comprendre un moyen redresseur 31 pour redresser un signal électrique produit par le générateur, ainsi qu'un moyen de stockage 32 de charges électriques, par exemple sous forme d'un capacité en sortie du moyen redresseur 31 permettant d'emmagasiner l'énergie électrique produite par le générateur. Le redresseur 31 est par exemple formé d'un pont de 4 diodes.

Les figures 5A-5C, illustrent un test du générateur triboélectrique précédemment décrit lors duquel on met en contact la couche diélectrique polymère 15 et le matériau diélectrique 25 du support 21 en appliquant un doigt sur le premier support 11 (figure 5A). La mise en contact est telle que la surface de contact entre les matériaux 15 et 25 peut être par exemple de l'ordre de 2.5 cm*2.5 cm. On relâche ensuite la pression exercée sur le premier support 11 et on visualise un signal électrique (figure 5B) généré par effet tribo-électrique en sortie du générateur par exemple en utilisant un oscilloscope ayant une impédance d'entrée par exemple de l'ordre de 1 MΩ.

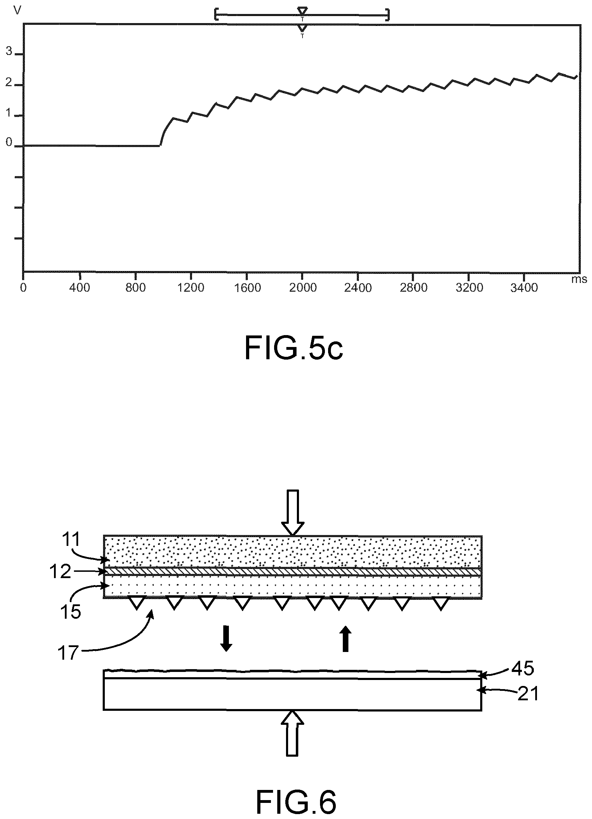

La figure 5C donne un exemple de signal électrique généré aux bornes de la capacité 32 en sortie du pont redresseur 31. De par la forme conique des pointes du générateur tribo-électrique, on peut obtenir un signal tribo-électrique d'amplitude importante.

Selon une variante de mise en oeuvre du générateur tribo-électrique, le matériau poreux diélectrique 15 comportant des micro-structures coniques 17, peut être mis en contact directement avec une électrode pour générer des charges électrostatiques.

La figure 6 illustre un exemple de réalisation particulier d'une telle variante dans laquelle le matériau poreux diélectrique 15 rugueux est destiné à être mis en contact avec une couche conductrice servant d'électrode et formée d'un matériau conducteur rugueux 42. Ce matériau conducteur rugueux 42 est un matériau dont la résistivité électrique diminue lorsque la température augmente tel que par exemple du Graphène.

Lorsqu'on actionne le générateur de manière à mettre en friction la couche conductrice rugueuse 42 à base de Graphène et le matériau poreux diélectrique 15 rugueux ayant des propriétés tribo-électriques différentes de celles du Graphène, on augmente la conductivité électrique du Graphène, ce qui permet d'augmenter le signal électrique généré par effet tribo-électrique.

Une application particulière d'un générateur triboélectrique selon l'un ou l'autre des exemples précédemment décrits concerne la mesure d'humidité. On peut ainsi prévoir d'intégrer le générateur à effet tribo-électrique dans un capteur d'humidité.

L'humidité au sein du capteur est susceptible de faire varier le frottement entre la couche 14 de matériau polymère diélectrique 15 rugueux à micro-pointes coniques et une autre couche ayant des propriétés tribo-électriques différentes.

Ainsi, suivant l'humidité du milieu dans lequel se trouve le capteur on peut obtenir en sortie du générateur, pour une même force d'actionnement permettant de provoquer une mise en contact de ses éléments, différents niveaux de signaux en sortie du générateur à effet tribo-électrique.

## Revendications

1. Procédé de réalisation d'un élément de générateur triboélectrique comportant un matériau à base de polymère diélectrique rugueux destiné, pour créer des charges électriques, à être mis en contact avec un autre matériau ayant des propriétés triboélectriques différentes de celles du matériau polymère diélectrique, le procédé comprenant des étapes consistant à :
a) former sur un support (11) une couche (14) à base d'un matériau formé d'un polymère diélectrique donné (15),
**caractérisé en ce que** le procédé comprend également l'étape consistant à :
b) effectuer au moins traitement thermique de manière à cristalliser le matériau polymère diélectrique donné et former des structures en forme de micro-pointes (17) en surface du matériau polymère diélectrique donné.

2. Procédé selon la revendication 1, dans lequel le matériau polymère diélectrique donné comprend un terpolymère ou un copolymère à base de PVDF.

3. Procédé selon la revendication 1 ou 2, dans lequel le matériau polymère diélectrique donné est hydrophobe.

4. Procédé selon la revendication 2 ou 3, dans lequel le matériau polymère diélectrique donné est à base à base de polyfluorure de vinylidène (PVDF), en particulier à base de P(VDF-TrFe-CFE) et/ou de P(VDF-TrFe-CTFE) ou du P(VDF-TrFe).

5. Procédé selon l'une des revendications 1 à 4, dans lequel le matériau polymère formé à l'étape a) est mélangé à un additif de sorte que, la cristallisation du matériau polymère diélectrique conduit à l'exercice de contraintes mécaniques sur l'additif et favorise l'apparition de structures en forme de micro-pointes sur la surface.

6. Procédé selon la revendication 5, dans lequel l'additif est un composé absorbant le rayonnement UV tel que du Pyrène.

7. Procédé selon l'une des revendications 1 à 6, dans lequel l'étape b) de traitement thermique comprend un recuit photonique par exposition de la couche de matériau polymère à au moins une impulsion lumineuse de rayonnement UV.

8. Procédé selon l'une des revendications 1 à 7 dans lequel le support est un support flexible à base de matériau polymère.

9. Procédé de fabrication d'un générateur à effet triboélectrique comprenant un premier élément destiné à être mis en contact avec un deuxième élément pour créer des charges électriques, le procédé comprenant des étapes consistant à :
- effectuer un procédé suivant l'une des revendications 1 à 7 pour former le premier élément,
- former une couche à base de Graphène sur un deuxième support (21) pour réaliser le deuxième élément.

10. Générateur triboélectrique comprenant un premier élément et un deuxième élément, le générateur étant apte à créer des charges électriques par effet tribo-électrique par mise en contact entre le premier élément et le deuxième élément, **caractérisé en ce que** le premier élément comprend une couche conductrice revêtue d'un matériau diélectrique polymère rugueux comportant des micro-pointes en forme de cône de révolution.

11. Générateur triboélectrique selon la revendication 10, dans lequel le matériau polymère diélectrique donné a une permittivité relative εᵣ > 30.

12. Générateur triboélectrique selon la revendication 10 ou 11, dans lequel le matériau polymère diélectrique donné est hydrophobe.

13. Générateur triboélectrique selon l'une des revendications 11 ou 12, dans lequel le matériau polymère diélectrique donné est à base d'un terpolymère tel que du P(VDF-TrFe-CFE) et/ou du P(VDF-TrFe-CTFE), ou un copolymère comme le P(VDF-TrFe).

14. Capteur d'humidité comprenant un générateur triboélectrique selon l'une des revendications 10 à 13.

## Patentansprüche

1. Verfahren zum Herstellen eines triboelektrischen Generatorelements, das ein raues dielektrisches Polymermaterial enthält, das dazu bestimmt ist, zum Erzeugen elektrischer Ladungen mit einem anderen Material mit triboelektrischen Eigenschaften, die sich von denen des dielektrischen Polymermaterials unterscheiden, in Kontakt zu treten, wobei das Verfahren die nachstehenden Schritte umfasst:
a) Bilden einer Schicht (14) auf der Basis eines Materials, das aus einem gegebenen dielektrischen Polymer (15) gebildet ist, auf einem Träger (11), **dadurch gekennzeichnet, dass** das Verfahren auch den nachstehenden Schritt umfasst:
b) Durchführen von zumindest einer Wärmebehandlung so, dass das gegebene dielektrische Polymermaterial kristallisiert wird, und Bilden von mikrospitzenförmigen Strukturen (17) an der Oberfläche des gegebenen dielektrischen Polymermaterials.

2. Verfahren nach Anspruch 1, wobei das gegebene dielektrische Polymermaterial ein Terpolymer oder Copolymer auf Basis von PVDF enthält.

3. Verfahren nach Anspruch 1 oder 2, wobei das gegebene dielektrische Polymermaterial hydrophob ist.

4. Verfahren nach Anspruch 2 oder 3, wobei das gegebene dielektrische Polymermaterial auf Basis von Polyvinylidenfluorid (PVDF), insbesondere auf Basis von P(VDF-TrFe-CFE) und/oder von P(VDF-TrFe-CTFE) oder von P(VDF-TrFe) besteht.

5. Verfahren nach einem der Ansprüche 1 bis 4, wobei das in Schritt a) gebildete Polymermaterial mit einem Additiv vermischt wird, so dass die Kristallisierung des dielektrischen Polymermaterials zum Ausüben von mechanischen Spannungen auf das Additiv führt und das Auftreten von mikrospitzenförmigen Strukturen an der Oberfläche begünstigt.

6. Verfahren nach Anspruch 5, wobei das Additiv eine UV-Strahlen absorbierende Verbindung, wie etwa Pyren, ist.

7. Verfahren nach einem der Ansprüche 1 bis 6, wobei der Schritt b) der Wärmebehandlung ein photonisches Tempern durch Belichten der Schicht aus Polymermaterial mit zumindest einem UV-Lichtimpuls umfasst.

8. Verfahren nach einem der Ansprüche 1 bis 7, wobei der Träger ein flexibler Träger auf Basis von Polymermaterial ist.

9. Verfahren zum Herstellen eines triboelektrischen Generators, der ein erstes Element enthält, das dazu bestimmt ist, zum Erzeugen elektrischer Ladungen mit einem zweiten Element in Kontakt zu treten, wobei das Verfahren die nachstehenden Schritte umfasst:
- Durchführen eines Verfahrens nach einem der Ansprüche 1 bis 7 zum Bilden des ersten Elements,
- Bilden einer Schicht auf Basis von Graphen auf einem zweiten Träger (21) zum Herstellen des zweiten Elements.

10. Triboelektrischer Generator mit einem ersten Element und einem zweiten Element, wobei der Generator dazu geeignet ist, elektrische Ladungen durch triboelektrischen Effekt durch Inkontaktbringen des ersten Elements mit dem zweiten Element zu erzeugen, **dadurch gekennzeichnet, dass** das erste Element eine leitfähige Schicht enthält, die mit einem rauen dielektrischen Polymermaterial beschichtet ist, das kreiskegelförmige Mikrospitzen enthält.

11. Triboelektrischer Generator nach Anspruch 10, wobei das gegebene dielektrische Polymermaterial eine relative Dielektrizitätskonstante εᵣ > 30 hat.

12. Triboelektrischer Generator nach Anspruch 10 oder 11, wobei das gegebene dielektrische Polymermaterial hydrophob ist.

13. Triboelektrischer Generator nach einem der Ansprüche 11 oder 12, wobei das gegebene dielektrische Polymermaterial auf Basis von Terpolymer, wie etwa P(VDF-TrFe-CFE) und/oder von P(VDF-TrFe-CTFE), oder ein Copolymer, wie etwa P(VDF-TrFe), besteht.

14. Feuchtigkeitssensor mit einem triboelektrischen Generator nach einem der Ansprüche 10 bis 13.

## Claims

1. Method of producing a triboelectric generator element comprising a material based on rough dielectric polymer intended, in order to create electrical charges, to be placed in contact with another material having different triboelectric properties to those of the dielectric polymer material, the method including the steps consisting in:
a) forming on a support (11) a layer (14) based on a material formed of a given dielectric polymer (15),
**characterised in that** it further comprises the step consisting of:
b) carrying out at least one heat treatment so as to crystallise the given dielectric polymer material and to form micro-tip shaped structures (17) on the surface of the given dielectric polymer material.

2. Method according to claim 1, wherein the given dielectric polymer material includes a terpolymer or a copolymer based on PVDF.

3. Method according to claim 1 or 2, wherein the given dielectric polymer material is hydrophobic.

4. Method according to claim 2 or 3, wherein the given dielectric polymer material is based on polyvinylidene fluoride (PVDF), in particular based on P(VDF-TrFe-CFE) and/or P(VDF-TrFe-CTFE) or P(VDF-TrFe).

5. Method according to one of claims 1 to 4, wherein the polymer material formed at step a) is mixed with an additive such that the crystallisation of the dielectric polymer material leads to the exertion of mechanical stresses on the additive and favours the appearance of micro-tip shaped structures on the surface.

6. The method according to claim 5, wherein the additive is a UV radiation absorbing compound such as pyrene.

7. Method according to one of claims 1 to 6, wherein the heat treatment step b) includes a photonic annealing by exposure of the layer of polymer material to at least one UV radiation light pulse.

8. Method according to one of claims 1 to 7, wherein the support is a flexible support based on polymer material.

9. Method of manufacturing a triboelectric effect generator including a first element intended to be placed in contact with a second element to create electrical charges, the method including the steps consisting in:
- carrying out a method according to one of claims 1 to 7, so as to form the first element,
- forming a layer based on graphene on a second support (21) to produce the second element.

10. Triboelectric generator including a first element and a second element, the generator being able to create electrical charges by triboelectric effect by placing in contact the first element and the second element, **characterised in that** the first element includes a conducting layer coated with a rough dielectric polymer material comprising micro-tips having the shape of a cone of revolution.

11. Triboelectric generator according to claim 10, wherein the given dielectric polymer material has a relative permittivity εᵣ > 30.

12. Triboelectric generator according to claim 10 or 11, wherein the given dielectric polymer material is hydrophobic.

13. Triboelectric generator according to one of claims 11 or 12, wherein the given dielectric polymer material is based on a terpolymer such as P(VDF-TrFe-CFE) and/or P(VDF-TrFe-CTFE), or a copolymer such as P(VDF-TrFe).

14. Humidity sensor including a triboelectric generator according to one of claims 10 to 13.
